# EUROPEAN PATENT SPECIFICATION

(11) **EP 1 493 762 B1**
(45) Date of publication and mention of the grant of the patent: **30.05.2007**
(21) Application number: 03015170.8
(22) Date of filing: 04.07.2003
(51) Int. Cl.: C08G 18/12, C08G 18/40, C08G 18/75

(54) **Resin and Ink for the Printing of Shrink Sleeves**
Harz und Tinte zum Bedrucken von schrumpfbaren Manschetten
Résine et encre pour imprimer des manchons retractables

(43) Date of publication of application: 05.01.2005
(73) Proprietor: Siegwerk Benelux NV, 2880 Bornem (BE)
(72) Inventor: Eugène, Denis, 74800 La Roche sur Foron (FR); Eisele, Gilles, 74250 Fillinges (FR); Catherin, Gilles, 01630 St. Genis Pouilly (FR)
(74) Representative: Hepp, Dieter

(56) References cited:
- EP-A- 0 930 349
- EP-A- 1 229 090
- WO-A-00/53429
- WO-A-02/38643
- DE-A- 19 816 528
- US-B1- 6 251 988

## Description

The present invention relates to specific polyurethane resins useful as binders in inks for printing shrink sleeves, to the ink comprising said binders and to methods of preparing and using said binders and inks.

Shrink sleeves or shrink labels have become a very popular means for providing images and information, for example to prevent tampering, to products such as bottles, cans and jars. A shrink sleeve or shrink label is a film of an oriented plastic sheet or tube. Said film may be printed, formed into a tube and wound onto a core. A desired part of said wound film is unwound, cut and placed on or around the item to which said sleeve or label is to be applied. By applying heat to the film, the film is caused to shrink and to conform exactly to the shape of the item.

The advantage of shrink sleeves is that it is much easier to print designs, complicated images etc. onto said sleeves before they are applied to an item as compared to directly printing said designs, information, images etc. to the items. A further advantage is that shrink sleeves may provide protection against UV light.

The shrink sleeves are printed by means of either an flexographic or rotogravure process. The print may be provided onto the surface or the reverse side of the film forming the shrink sleeve. It is preferred to provide the print on the reverse side of the film since it is then protected against environmental influences.

In order to be useful for the printing of shrink sleeves, besides the common requirements imposed by the flexographic or rotogravure process, an ink system must have excellent adhesion and flexibility, before and after the shrinking of the film. In particular, it must exhibit good tape adhesion, wrinkle adhesion, and scratch resistance before and after the shrinking process, respectively. The ink should exhibit no blocking of ink to ink as well as of ink to the reverse side of the film. Furthermore, for certain applications, for example in the food industry, the ink system should be capable of withstanding the conditions of a pasteurisation. Moreover, the ink should exhibit low levels of retained solvent after printing and have a low odour level.

The printing inks currently used for printing shrink sleeves are based on an acrylic resin and cellulose acetate propionate (CAP). While nitrocellulose is the most common resin employed in solvent-based flexographic inks, up to now no suitable binder resin is known which in combination with nitrocellulose provides the required characteristics for a shrink sleeve printing ink. It would be desirable to use nitrocellulose instead of CAP, since CAP has a more limited compatibility, for example with respect to various pigments. Also, adhesion of the currently used CAP/acrylic inks on several films such as oriented polystyrene (OPS) is not satisfactory.

Inks on the basis of nitrocellulose and specific polyurethane resins are known in the art. Such flexographic inks are described, for example, in EP-A-0 730 014, WO 02/38643, GB-2 161 817, or US-4,111,916. However, the use of such inks for printing shrink sleeves has not been suggested yet.

It was therefore the object of the present invention to provide a binder resin which can be used in combination with nitrocellulose for the manufacture of a shrink sleeve printing ink, and to provide such a shrink sleeve printing ink comprising nitrocellulose.

It has been surprisingly found that printing inks excellently fulfilling the requirements for shrink sleeve printing can be made using a polyurethane resin according to claim 1.

In particular, said polyurethane resin is obtainable by
a) reacting an excess of one or more aliphatic diisocyanates with a group of isocyanate-reactive components consisting of one or more polyether polyols each having an average molecular weight in the range of 1000 to less than 3000 g/mol alone or in admixture with one or more polyester polyols each having an average molecular weight in the range of 1000 to less than 3000 g/mol;
b) adding at least one diamine;
c) adding one or more polyols each having an average molecular weight of equal or less than 800 g/mol either before or after the reaction with the at least one diamine; and
d) optionally reacting the product obtained in steps a) to c) with at least one terminating agent.

According to the present invention, all molecular weights are weight average molecular weights.

The term "aliphatic diisocyanate" is to be understood as to comprise straight-chain aliphatic, branched aliphatic as well as cycloaliphatic diisocyanates. Preferably, the diisocyanate comprises 1 to 10 carbon atoms. Examples of preferred diisocyanates are 1,4-diisocyanatobutane, 1,6-diisocyanatohexane, 1,5-diisocyanato-2,2-dimethylpentane, 4-trimethyl-1,6-diisocyanatohexane, 1,10-diisocyanatodecane, 1,3- and 1,4-diisocyanatocyclo-hexane, 1-isocyanato-5-isocyanatomethyl-3,3,5-trimethylcyclohexane (isophorone diisocyanate (IPDI)), 2,3- 2, 4- and 2,6-diisocyanato-1-methylcyclohexane, 4,4'-and 2,4'-diisocyanatodicyclohexylmethane, 1-isocyanato-3-(4)-isocyanatomethyl-1-methyl- cyclohexane, 4,4'- and 2,4'-diisocyanatodiphenylmethane, and mixtures thereof, or 2,2,4- or 2,4,4-trimethyldiisocyanatohexane (TMDI).

The polyether polyol components of the polyurethane resin of present invention are generally defined by the formula 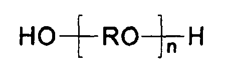 wherein R is a C₂ to C₁₀ straight chain or branched hydrocarbon group. Preferably, R is an alkylene group comprising 2 to 4 carbon atoms. Examples of preferred polyether polyols include polyethyleneether glycols (PEG), polypropyleneether glycols (PPG) and polytetramethylene ether glycols (Poly-THF), or a mixture thereof. According to the present invention, the use of Poly-THF is particularly preferred. In the above formula, n is chosen such that the average molecular weight of the polyether polyols ranges from 1000 to less than 3000, preferably from 1000 to 2000. An especially preferred polyether polyol of the present invention is Poly-THF 2000.

The one or more diisocyanates and the one or more polyether polyols are reacted with each other to form a first isocyanate-terminated prepolymer. Therefore, an excess of one or more diisocyanates is reacted with the one or more polyether polyols. According to the present invention, the ratio of equivalent weights of diisocyanate components to polyether polyol components is in a range of 3,6: 1 and 1:1, preferably 2:1.

The reaction is carried out under conditions which are well known to those skilled in the art. According to a preferred embodiment, the reaction is carried out in the presence of a solvent using well-known catalysts.

Examples of suitable solvents are alkyl acetates such as methyl acetate, ethyl acetate, propyl acetate, butyl acetate and pentyl acetate. The total amount of solvent typically ranges from 0 to 90 percent by weight of the reaction mixture, preferably from 25 to 60 percent by weight of the reaction mixture.

A catalyst may be advantageously employed to accelerate the reaction of diisocyanate with diol. Suitable catalysts are tin derivatives such as stannous octylate, stannous oxalate, dibutyltin dilaurate, zinc derivatives such as zinc diacetate, zinc bisacetyl acetonate or Organotitanium compounds such as tetrabutytitanate, or mixtures thereof.

Further additives may be present. For example, an antioxidant such as Irganox 1076 (octadecyl-3,5-di-t-butyl-4-hydroxyhydrocinnamate) may be added.

Formation of the isocyanate-terminated prepolymer is generally carried out at a temperature ranging from 0 to 130°C, preferably ranging from 50 to 90°C. The time of the reaction generally ranges from a period of from 1 to 12 hours, preferably from 1 to 4 hours.

The thus formed isocyanate-terminated prepolymer is chain-extended with at least one diamine. The diamine can be any aliphatic, cycloaliphatic, aromatic, or heterocyclic diamine having primary or secondary amino groups. According to the present invention, hydrazine is not comprised by the group of diamines. Example are ethylenediamine, 1,2-diaminopropane, 1,3-diaminopropane, diaminobutane, hexamethylenediamine, 1,4-diaminocyclohexane, 3-aminomethyl-3,5,5-trimethylcyclohexylamine (isophorone diamine), m-xylylene diamine or 1,3-bis (aminomethyl) cyclohexane. According to the present invention, isophorone diamine is particularly preferred.

According to the present invention, it is preferred that only a small chain-extension with the diamine is carried out. Therefore, the ratio of equivalent weights of the isocyanate-terminated prepolymer to the diamine components is in a range of 10:1 and 5:1, preferably 7:1 and 5:1. Thus, the product of this reaction is a chain-extended isocyanate-terminated prepolymer.

The reaction is carried out under conditions which are well known to those skilled in the art. According to a preferred embodiment, the reaction is carried out by adding the diamine dissolved in one of the solvents mentioned before as solvents for the reaction of the diisocyanate with the polyether polyol to the reaction mixture. The reaction is generally carried out at a temperature ranging from 0 to 90°C, preferably from 25 to 75°C, for 5 minutes to 2 hours.

The chain-extended isocyanate-terminated prepolymer is reacted with one or more polyols each having an average molecular weight of equal or less than 800 g/mol. According to the present invention, the term polyol is to be understood to comprise chemical substances having at least two hydroxyl groups. In this step, a significant chain extension of the prepolymer is carried out. According to the present invention, diols such as 1,4-butanediol, 1,6-hexanediol, neopentyl glycol, dihydroxy polyether polyols, polyester polyols are preferred as polyol component. The ratio of equivalent weights of the chain-extended isocyanate-terminated prepolymer to the polyol components of this section is in a range of 2:1 and 1:1, preferably 1,6:1 and 1,2:1.

The reaction is carried out under conditions which are well known to those skilled in the art. According to a preferred embodiment, the reaction is carried out by adding the one or more polyols to the reaction mixture. The reaction is generally carried out at a temperature ranging from 0 to 90°C, preferably from 25 to 75°C, for 30 minutes to 3 hours.

According to the present invention, however, the steps of reacting the isocyanate-terminated prepolymer with at least one diamine and with at least one polyol having an average molecular weight of less than 800 g/mol can be also carried out the other way round, i.e. first reacting the isocyanate-terminated prepolymer with at least one polyol having an average molecular weight of less than 800 g/mol, and thereafter with at least one diamine. Which route is preferred depends on the components used, and can be easily retrieved by a man skilled in the art.

The thus formed prepolymer may further be reacted with one or more terminating agents. The terminating agents can be chosen from the group consisting of amines and alcohols. Examples of amines are monamines and diamines are butylamine, dibutylamine, aminopropylmorpholine, aminoethylpiperazine, dimethylaminopropylamine, di(isopropanol) amine, aminoethoxyethanol, ethanolamine, dimethanolamine, 4-aminophenol, isophoronediamine, or oleyl amine. Examples of alcohols are 1-propanol, 2-propanol, 1-butanol, 2-butanol, neopentyl alcohol, ethanol, or oleyl alcohol. The ratio of equivalent weights of the prepolymer to the terminating agents is in a range of 10:1 and 2:1.

The reaction is carried out under conditions which are well known to those skilled in the art. According to a preferred embodiment, the reaction is carried out by adding the one or more terminating agents to the reaction mixture. The reaction is-generally carried out at a temperature ranging from 0 to 90°C, preferably from 25 to 75°C, for 50 minutes to 1 hour.

Optionally, the final product can be diluted in a solvent such as an alcohol, preferably ethanol, or an ester such as n-propyl acetate, in order to obtain a clear solution.

The thus prepared polyurethane resin has a weight average molecular weight in the range of 20000 to 80000 g/mol, preferably between 25000 to 55000 g/mol. The resin is soluble in organic solvents comprising alcohols such as ethanol. The resin according to the present invention preferably has a degree of urethanisation between 10 and 30%.

Although the above described polyurethane resin is most preferred according to the present invention, it has been found out that also other polyurethane resins can be successfully used. For example, polyurethane resins can be used wherein besides the above-mentioned components also at least one polyester component having an average molecular weight of from 1000 to less than 3000 g/mol is added during the first step of the preparation of the polyurethane resin. An example for such a polyester component is Fomrez 3089, a commercially available polyester polyol from Crompton, having an average molecular weight of about 2000 g/mol. Fomrez is a tradename for glycol adipate polyester polyols. The glycol moiety can be ethylene glycol, dipropylene glycol, diethylene glycol, neopentyl glycol, hexanediol, or butanediol. However, also other polyester polyols such as the ones obtained by condensation of at least one dibasic acid or anhydrides thereof, such as adipic acid, phthalic acid, isophtalic acid, maleic acid, fumaric acid, or succinic acid, with at least one glycol such as linear or branched alkylene diols, e.g. butanediol, propylene glycol, hexane diol, or neopentyl glycol. In this case, the ratio of equivalent weights of diisocyanate components to the isocyanate-reactive components, which are composed of the polyether polyol and polyester polyol components, is in a range of 3,6: 1 and 1:1, preferably 2:1. The other reaction conditions are the same as mentioned above when only polyether polyols are used.

The resulting polyurethane resin or its clear solution in the above mentioned solvent, for example ethanol or n-propyl acetate, can be used directly, without other additives, as a binder material for shrink sleeve inks. Depending on the specific requirements, however, additives such as, e. g., fillers, thickeners, other co-resins, waxes such as armid wax, may be added. According to a preferred embodiment of the present invention, the binder for the shrink sleeve ink comprises 40 to 70 wt.-% of the polyurethane resin, 5 to 20 wt.-% of one or more waxes, and the balance of solvent.

It has been surprisingly found that by using the above described specific polyurethane resin as binder material, printing inks on the basis of nitrocellulose can be manufactured which fulfil all the requirements imposed to a shrink sleeve printing ink. The use of nitrocellulose provides a higher compatibility of the printing ink with respective to pigments as compared to inks on the basis of CAP.

For preparing a shrink sleeve printing ink according to the present invention, the binder material defined above is combined with a pigment to form a printing ink composition. Optionally, a solvent and other additives such as fillers, surfactants, varnishes, wax may be added depending upon the specific requirements imposed on the printing ink.

The generic term pigment is specifically used in this specification in that it is intended to refer to both pigments and dyes which impart a distinct color to the printing ink composition. Due to the use of nitrocellulose instead of CAP, according to the present invention any pigment which is typically used in flexographic or rotogravure inks such as monoazo yellows (e. g. Cl Pigment Yellows 3,5,98); diarylide yellows (e. g. Cl Pigment Yellows 12,13,14); Pyrazolone Orange, Permanent Red 2G, Lithol Rubine 4B, Rubine 2B, Red Lake C, Lithol Red, Permanent Red R, Phthalocyanine Green, Phthalocyanine Blue, Permanent Violet, titanium dioxide, carbon black, may be used.

The pigment is employed in amounts of from 10 to 60 percent by weight, based on the weight of the ink composition.

The pigment is combined with the binder material by any convenient method. According to the present invention, the pigment is provided in form of a dispersion in nitrocellulose. Dispersion of the pigment in nitrocellulose can be carried out, for example, by milling methods. Examples are ball mill, sand mill, horizontal media mill, high-shear fluid flow mill.

The printing inks according to the present invention comprise 20 to 50 wt.-% of the above described polyurethane resin as a binder material.

Additionally, the printing inks according to the present invention may comprise a solvent and other additives such as fillers, surfactants, varnishes, wax. According to a preferred embodiment of the present invention, the printing ink comprises 1 to 10 wt.-% of one or more additives. A preferred additive for use in the printing inks according to the present invention is a ketonic varnish formed by condensation of cyclohexanone and formaldehyde.

As additional solvent components forming the balance of the printing ink, alcohols such as ethanol, n-propanol or methoxypropanol, or esters such as ethyl acetate or n-propyl acetate may be used.

The printing ink according to the present invention excellently fulfils all the requirements imposed to a shrink sleeve printing ink, i.e. an ink useful for printing shrink sleeves. In particular, the printing ink according to the present invention
- can be printed by means of a flexographic and of a rotogravure process resulting in excellent print quality
- exhibits excellent adhesion and flexibility; in particular, the ink exhibits excellent adhesion before and after the shrinking of the film
- exhibits excellent tape adhesion
- exhibits excellent wrinkle adhesion
- exhibits excellent scratch resistance before and after the shrinking process
- exhibits no blocking of ink to ink as well as of ink to the reverse side of the film
- is capable of withstanding the conditions of a pasteurisation
- exhibits low levels of retained solvent after printing
- has a low odour level.

According to the present invention, the term shrink sleeve is to be understood to comprise shrink sleeve labels as well as roll-fed, wrap-around shrink labels in both unshrinked tubular form as well as in the final shrinked form.

The printing ink according to the present invention shows a superior adhesion to the film-forming materials of shrink sleeves as compared to the conventional shrink sleeve printing inks on the basis of cellulose acetate propionate (CAP) and acrylic resin.

The films from which the shrink sleeves are formed are usually made of polyvinylchloride (OVC), polyesters such as polyethylene terephthalate (PET), glycol-modified polyesters such as polyethylene terephthalate glycol (PETG), oriented polystyrene (OPS), polypropylene, or modified polystyrene resins, such as the K resin from Chevron. The importance of OPS as film-forming material is growing, especially because of environmental concerns against the use of PVC. The shrink sleeve printing ink according to the present invention shows a particularly excellent adhesion on OPS.

For the first time, the present invention provides useful shrink sleeve printing inks on the basis of nitrocellulose. This is made possible by the use of a polyurethane binder resin, in particular of a polyurethane binder resin as described above.

The present invention also provides shrink sleeves comprising the above described shrink sleeve printing ink on at least part of its surface portion.

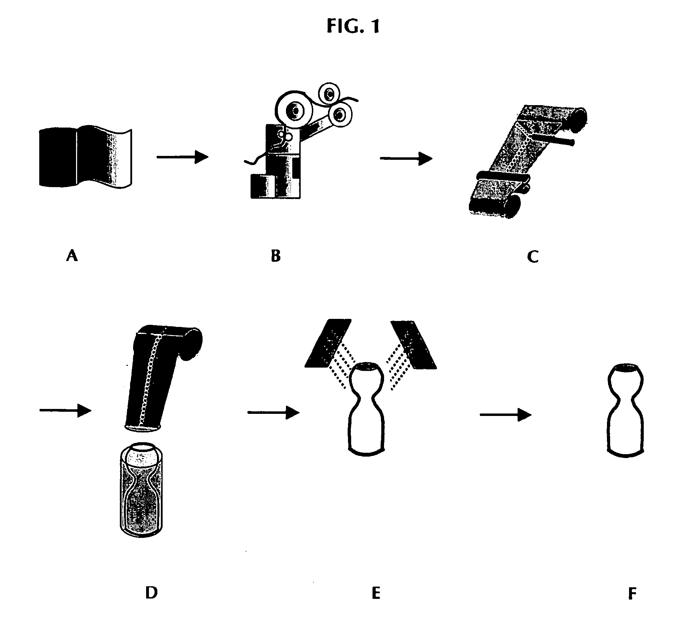

Hereinafter, the process of manufacturing shrink sleeves is generally outlined by reference to Fig. 1, which is not intended to limit the scope of the present application.

In a first step (A), the film material for forming the shrink sleeves is provided. Generally, shrink sleeves are made from films having a thickness of 30 to 70 µm. A preferred thickness is 40 to 50 µm. Typically, films for shrink sleeves have a transverse direction orientation (TD) of 50-52% or of 60-62%. The films should have a machine direction orientation (MD) of 6-10%, preferably as low as possibly. As film material, any of the above mentioned materials such as OPS, PVC, or PET may be used. According to the present invention, OPS is preferred as material for forming shrink sleeves.

The film material is chosen depending upon the item to which the shrink sleeve is to be applied. In particular, the film material is chosen in view of the shrink ratio required for a specific application. Generally, the amount of shrink in the film should be at least 10% greater than the size of the item around which the shrink sleeve is to be placed, in the area where the greatest amount of shrink is required. OPS is preferred because of its favourable shrinking characteristics.

In a next step (B), the film material is printed with the shrink sleeve printing ink according to the present invention. Said printing can be performed by either the flexographic or the rotogravure process. According to the present invention, the flexographic process is performed.

Both the flexographic and the rotogravure process are known to the man skilled in the art. For details of said processes, reference is made, for example, to R.H. Leach, The printing ink manual, 5^{th} ed. , Blueprint, London 1993.

It is preferred that the film material is reverse-printed. This means that the print is on the inside of the finished shrink sleeve. A reverse-printed design is protected against influences from the outside, such as, for example, environmental influences or scratching by a person using the item carrying said shrink sleeve.

In order to provide good surface adhesion of the printing ink, the film material may be surface-treated immediately prior to the printing process. Such surface-treatment processes are known to the man skilled in the art. For example, the film material may be corona-treated.

Thereafter, in a step (C), the printed film is formed into a tube and wound onto a core. Hereby, the log edges of the film are seamed together. The seaming process can be carried out by any method conventionally used for that purpose in the art. For example, seaming may be carried out using a nozzle applying heat to the film portions to be seamed together. Usually, seam areas of 6 to 10 mm are provided.

However, also seamless tubing may be used for making shrink sleeves. In this process, a tube is made by extrusion and applied to the item as described above.

The dimensions of the tube to be formed have to set in view of the item to which the finished shrink sleeve is to be applied. The film material must have a layflat (LF) of one half of the greatest circumference of the item around which the shrink sleeve is to be placed. LF is defined as the distance across the finished tube, not taking into account the material needed for the seam. The actual dimension of the film should, however, exceed the LF in order to allow sliding of the tube over the item to which the finished shrink sleeve is to be applied. Generally, at least 4 mm of distance exceeding the LF are provided to allow sliding.

In a next step (D), the tube is unwound from the core and put over the item to which the shrink sleeve is to be applied. The tube is cut to the appropriate length by means of a cutting device known to the man skilled in the art. Alternatively, the cutting of the tube may be performed prior to putting the tube over the item.

In a next step (E), the tube is shrunk so that the finished shrink sleeve exactly conforms to the shape of the item over which it has been placed. Shrinking of the tube may be carried out by any process commonly used for that purpose in the art. Generally, shrinking is performed by applying heat from suitable heating means such as an oven.

The finished product is an item carrying a shrink sleeve printed with the shrink sleeve printing ink according to the present invention, wherein said shrink sleeve conforms to the shape of said item.

## Claims

1. Polyurethane resin, obtainable by
a) reacting an excess of one or more aliphatic diisocyanates with a group of isocyanate-reactive components consisting of one or more polyether polyols each having an average molecular weight in the range of 1000 to less than 3000 g/mol alone or in admixture with one or more polyester polyols each having an average molecular weight in the range of 1000 to less than 3000 g/mol;
b) adding at least one diamine;
c) adding of one or more polyols each having an average molecular weight of equal or less than 800 g/mol either before or after the reaction with the at least one diamine; and
d) optionally reacting the product obtained in steps a) to c) with at least one terminating agent.

2. Polyurethane resin according to claim 1, wherein the at least one polyether polyol has the formula 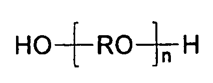 wherein R is a C₂ to C₁₀ straight chain or branched hydrocarbon group.

3. Polyurethane resin according to claim 1 or 2, wherein the one or more polyester polyols are selected from the group consisting of glycol adipate polyester polyols, or the condensation products of at least one dibasic acid or anhydrides thereof, such as adipic acid, phthalic acid, isophtalic acid, maleic acid, fumaric acid, or succinic acid, with at least one glycol such as linear or branched alkylene diols, for example butanediol, propylene glycol, hexane diol, or neopentyl glycol.

4. Polyurethane resin according to any one of claims 1 to 3, wherein the ratio of equivalent weights of diisocyanate components to the isocyanate-reactive components is in a range of 3,6: 1 and 1:1.

5. Polyurethane resin according to any one of claims 1 to 4, wherein the least one diamine is an aliphatic, cycloaliphatic, aromatic, or heterocyclic diamine having primary or secondary amino groups.

6. Polyurethane resin according to any one of claims 1 to 5, wherein the ratio of equivalent weights of the prepolymer to the diamine components in step b) is in a range of 10:1 and 5:1.

7. Polyurethane resin according to any one of claims 1 to 6, wherein the ratio of equivalent weights of the prepolymer to the polyol components in step c) is in a range of 2:1 and 1:1.

8. Polyurethane resin according to any one of claims 1 to 7, wherein ratio of equivalent weights of the prepolymer to the terminating agents in step d) is in a range of 10:1 and 2:1.

9. Polyurethane resin according to any one of claims 1 to 8, having weight average molecular weight in the range of 20000 to 80000 g/mol, and a degree of urethanisation between 10 and 30%.

10. Process of preparing a polyurethane resin, comprising the steps of
a) reacting an excess of one or more aliphatic diisocyanates with a group of isocyanate-reactive components consisting of one or more polyether polyols each having an average molecular weight in the range of 1000 to less than 3000 g/mol alone or in admixture with one or more polyester polyols each having an average molecular weight in the range of 1000 to less than 3000 g/mol;
b) adding at least one diamine;
c) adding of one or more polyols each having an average molecular weight of equal or less than 800 g/mol either before or after the reaction with the at least one diamine; and
d) optionally reacting the product obtained in steps a) to c) with at least one terminating agent.

11. Process according to claim 10, wherein step a) is carried out in the presence of a solvent, a catalyst and optionally additives.

12. Binder material for shrink sleeve printing ink, comprising a polyurethane resin according to any one of claims 1 to 9.

13. Binder material according to claim 12, additionally comprising additives and solvent.

14. Process of preparing a binder material according to claims 12 or 13, comprising the steps of dissolving a polyurethane resin according to any one of claims 1 to 9 in a solvent to provide a clear solution, and optionally adding additives to said clear solution.

15. Shrink sleeve printing ink, comprising a binder material according to claim 12 or 13.

16. Shrink sleeve printing ink according to claim 15, additionally comprising a pigment, nitrocellulose, and optionally additives and/or solvents.

17. Process of preparing a shrink sleeve printing ink according to claims 15 or 16, comprising the steps of providing a dispersion of said pigment in nitrocellulose, and combining said dispersion with said binder material and optionally said additives and/or solvents.

18. Shrink sleeve, comprising a shrink sleeve printing ink according to any one of claims 15 to 16 on at least part of its surface portion.

19. Shrink sleeve according to claim 18, wherein the shrink sleeve is made of material selected from the group consisting of oriented polystyrene, polyvinylchloride, polyesters such as polyethylene terephthalate, glycol-modified polyesters such as polyethylene terephthalate glycol (PETG), polypropylene, or modified polystyrene resins.

20. Process of manufacturing a shrink sleeve according to claims 18 or 19, comprising the steps
(A) providing a film material;
(B) printing said film material with s shrink sleeve printing ink according to claim 15 or 16;
(C) converting said printed film material into a tube.

21. Process according to claim 20, further comprising the steps of
(D) putting said tube over the item to which said shrink sleeve is to be applied and cutting the tube to the appropriate length; and
(E) shrinking said tube so that it conforms to the shape of the item.

22. Use of a polyurethane resin according to any one of claims 1 to 9 as a binder in a shrink sleeve printing ink comprising nitrocellulose.

23. Use of a binder material according to claims 12 or 13 for the manufacture of shrink sleeve printing ink.

24. Use of a shrink sleeve printing ink according to claims 15 or 16 in the manufacture of shrink sleeves.

## Patentansprüche

1. Polyurethanharz, erhältlich indem man
a) mindestens ein aliphatisches Diisocyanat im Überschuß mit einer Gruppe von isocyanatreaktiven Komponenten, bestehend aus einem Polyetherpolyol oder mehreren Polyetherpolyolen, jeweils mit einem mittleren Molekulargewicht von 1000 bis weniger als 3000 g/mol alleine oder unter Beimischung mit einem Polyesterpolyol oder mehreren Polyesterpolyolen, jeweils mit einem mittleren Molekulargewicht von 1000 bis weniger als 3000 g/mol, umsetzt,
b) mindestens ein Diamin hinzufügt,
c) entweder vor oder nach der Umsetzung mit dem mindestens einen Diamin ein Polyol oder mehrere Polyole, jeweils mit einem mittleren Molekulargewicht von höchstens 800 g/mol, hinzufügt und
d) gegebenenfalls das in den Schritten a) bis c) erhaltene Produkt mit mindestens einem Abbruchmittel umsetzt.

2. Polyurethanharz nach Anspruch 1, bei dem das mindestens eine Polyetherpolyol der Formel 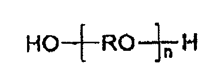 entspricht, wobei R für eine geradkettige oder verzweigte C₂-C₁₀-Kohlenwasserstoffgruppe steht.

3. Polyurethanharz nach Anspruch 1 oder 2, bei dem das mindestens eine Polyesterpolyol ausgewählt ist aus der Gruppe, bestehend aus Glykoladipatpolyesterpolyolen oder den Kondensationsprodukten mindestens einer dibasischen Säure oder deren Anhydride, wie Adipinsäure, Phthalsäure, Isophthalsäure, Maleinsäure, Fumarsäure oder Bernsteinsäure, mit mindestens einem Glykol wie linearen oder verzweigten Alkylendiolen, zum Beispiel Butandiol, Propylenglykol, Hexandiol oder Neopentylglykol.

4. Polyurethanharz nach einem der Ansprüche 1 bis 3, bei dem das Verhältnis der Äquivalentgewichte der Isocyanatkomponenten zu den isocyanatreaktiven Komponenten in einem Bereich von 3,6:1 und 1:1 liegt.

5. Polyurethanharz nach einem der Ansprüche 1 bis 4, bei dem es sich bei dem mindestens einen Diamin um ein aliphatisches, cycloaliphatisches, aromatisches oder heterocyclische Diamin mit primären oder sekundären Aminogruppen handelt.

6. Polyurethanharz nach einem der Ansprüche 1 bis 5, bei dem das Verhältnis der Äquivalentgewichte des Präpolymers zu den Diaminkomponenten in Schritt b) in einem Bereich von 10:1 und 5:1 liegt.

7. Polyurethanharz nach einem der Ansprüche 1 bis 6, bei dem das Verhältnis der Äquivalentgewichte des Präpolymers zu den Polyolkomponenten in Schritt c) in einem Bereich von 2:1 und 1:1 liegt.

8. Polyurethanharz nach einem der Ansprüche 1 bis 7, bei dem das Verhältnis der Äquivalentgewichte des Präpolymers zu den Abbruchmitteln in Schritt d) in einem Bereich von 10:1 und 2:1 liegt.

9. Polyurethanharz nach einem der Ansprüche 1 bis 8 mit einem gewichtsmittleren Molekulargewicht im Bereich von 20 000 bis 80 000 g/mol und einem Urethanisierungsgrad zwischen 10 und 30%.

10. Verfahren zur Herstellung eines Polyurethanharzes, bei dem man
a) mindestens ein aliphatisches Diisocyanat im Überschuß mit einer Gruppe von isocyanatreaktiven Komponenten, bestehend aus einem Polyetherpolyol oder mehreren Polyetherpolyolen, jeweils mit einem mittleren Molekulargewicht von 1000 bis weniger als 3000 g/mol alleine oder unter Beimischung mit einem Polyesterpolyol oder mehreren Polyesterpolyolen, jeweils mit einem mittleren Molekulargewicht von 1000 bis weniger als 3000 g/mol, umsetzt,
b) mindestens ein Diamin hinzufügt,
c) entweder vor oder nach der Umsetzung mit dem mindestens einen Diamin ein Polyol oder mehrere Polyole, jeweils mit einem mittleren Molekulargewicht von höchstens 800 g/mol, hinzufügt und
d) gegebenenfalls das in den Schritten a) bis c) erhaltene Produkt mit mindestens einem Abbruchmittel umsetzt.

11. Verfahren nach Anspruch 10, bei dem Schritt a) unter Zusatz eines Lösungsmittels, eines Katalysators und gegebenenfalls Additiven erfolgt.

12. Bindemittelmaterial für Schrumpfhüllendruckfarbe, enthaltend ein Polyurethanharz gemäß einem der Ansprüche 1 bis 9.

13. Bindemittelmaterial nach Anspruch 12, ferner enthaltend Additive und Lösungsmittel.

14. Verfahren zur Herstellung eines Bindemittelmaterials gemäß den Ansprüchen 12 oder 13, bei dem man ein Polyurethanharz gemäß einem der Ansprüche 1 bis 9 in einem Lösungsmittel klar löst und gegebenenfalls mit Additiven versetzt.

15. Schrumpfhüllendruckfarbe, enthaltend ein Bindemittelmaterial gemäß Anspruch 12 oder 13.

16. Schrumpfhüllendruckfarbe nach Anspruch 15, ferner enthaltend ein Pigment, Nitrocellulose und gegebenenfalls Additive und/oder Lösungsmittel.

17. Verfahren zur Herstellung einer Schrumpfhüllendruckfarbe gemäß den Ansprüchen 15 oder 16, bei dem man eine Dispersion des Pigments in Nitrocellulose bereitstellt und die Dispersion mit dem Bindemittelmaterial und gegebenenfalls den Additiven und/oder Lösungsmitteln kombiniert.

18. Schrumpfhülle mit Schrumpfhüllendruckfarbe gemäß einem der Ansprüche 15 bis 16 auf wenigstens einem Teil der Oberfläche.

19. Schrumpfhülle nach Anspruch 18, hergestellt aus Material, ausgewählt aus der Gruppe, bestehend aus orientiertem Polystyrol, Polyvinylchlorid, Polyestern wie Polyethylenterephthalat, glykolmodifizierten Polyestern wie Polyethylenterephthalatglykol (PETG), Polypropylen oder modifizierten Polystyrolharzen.

20. Verfahren zur Herstellung einer Schrumpfhülle gemäß den Ansprüchen 18 oder 19, bei dem man
(A) ein Folienmaterial bereitstellt,
(B) das Folienmaterial mit einer Schrumpfhüllendruckfarbe gemäß Anspruch 15 oder 16 bedruckt und
(C) das bedruckte Folienmaterial zu einer Röhre konfektioniert.

21. Verfahren nach Anspruch 20, bei dem man ferner
(D) die Röhre über den mit der Schrumpfhülle zu versehenen Gegenstand steckt und auf die entsprechende Länge zuschneidet und
(E) formkonform aufschrumpft.

22. Verwendung eines Polyurethanharzes gemäß einem der Ansprüche 1 bis 9 als Bindemittel in einer nitrocellulosehaltigen Schrumpfhüllendruckfarbe.

23. Verwendung eines Bindemittelmaterials gemäß den Ansprüchen 12 oder 13 zur Herstellung einer Schrumpfhüllendruckfarbe.

24. Verwendung einer Schrumpfhüllendruckfarbe gemäß den Ansprüchen 15 oder 16 bei der Herstellung von Schrumpfhüllen.

## Revendications

1. Résine de polyuréthanne, pouvant être obtenue
a) en faisant réagir un excès d'un ou de plusieurs diisocyanates aliphatiques avec un groupe de composants réactifs avec un isocyanate constitué d'un ou de plusieurs polyéther polyols ayant chacun un poids moléculaire moyen dans la plage de 1000 à moins de 3000 g/mole, seul(s) ou en mélange avec un ou plusieurs polyester polyols ayant chacun un poids moléculaire moyen dans la plage de 1000 à moins de 3000 g/mole ;
b) en ajoutant au moins une diamine ;
c) en ajoutant un ou plusieurs polyols ayant chacun un poids moléculaire moyen égal ou inférieur à 800 g/mole avant ou après la réaction avec ladite au moins une diamine ; et
d) en faisant réagir facultativement le produit obtenu dans les étapes a) à c) avec au moins un agent de terminaison.

2. Résine de polyuréthanne selon la revendication 1, dans lequel ledit au moins un polyéther polyol a la formule 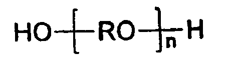 dans laquelle R est un groupe hydrocarboné ramifiée ou à chaîne droite en C₂ à C₁₀.

3. Résine de polyuréthanne selon la revendication 1 ou 2, dans laquelle le ou les polyester polyols sont choisis dans le groupe constitué des polyester polyols adipates de glycol, ou des produits de condensation d'au moins un acide dibasique ou d'anhydrides de celui-ci, comme l'acide adipique, l'acide phtalique, l'acide isophtalique, l'acide maléique, l'acide fumarique ou l'acide succinique, avec au moins un glycol tel que des alkylènediols linéaires ou ramifiés, par exemple le butanediol, le propylèneglycol, l'hexanediol, ou le néopentylglycol.

4. Résine de polyuréthanne selon l'une quelconque des revendications 1 à 3, dans laquelle le rapport des poids équivalents des composants diisocyanates sur les composants réactifs avec un isocyanate est dans une plage de 3,6:1 à 1:1.

5. Résine de polyuréthanne selon l'une quelconque des revendications 1 à 4, dans laquelle ladite au moins une diamine est une diamine aliphatique, cycloaliphatique, aromatique ou hétérocyclique ayant des groupes amino primaires ou secondaires.

6. Résine de polyuréthanne selon l'une quelconque des revendications 1 à 5, dans laquelle le rapport des poids équivalents du prépolymère sur les composants diamines dans l'étape b) est dans une plage de 10:1 à 5:1.

7. Résine de polyuréthanne selon l'une quelconque des revendications 1 à 6, dans laquelle le rapport des poids équivalents du prépolymère sur les composants polyols dans l'étape c) est dans une plage de 2:1 à 1:1.

8. Résine de polyuréthanne selon l'une quelconque des revendications 1 à 7, dans laquelle le rapport des poids équivalents du prépolymère sur les agents de terminaison dans l'étape d) est dans une plage de 10:1 à 2:1.

9. Résine de polyuréthanne selon l'une quelconque des revendications 1 à 8, ayant un poids moléculaire moyen en poids dans la plage de 20 000 à 80 000 g/mole, et un degré d'uréthanisation compris entre 10 et 30 %.

10. Procédé de préparation d'une résine de polyuréthanne, comprenant les étapes de
a) réaction d'un excès d'un ou de plusieurs diisocyanates aliphatiques avec un groupe de composants réactifs avec un isocyanate constitué d'un ou de plusieurs polyéther polyols ayant chacun un poids moléculaire moyen dans la plage de 1000 à moins de 3000 g/mole, seul(s) ou en mélange avec un ou plusieurs polyester polyols ayant chacun un poids moléculaire moyen dans la plage de 1000 à moins de 3000 g/mole ;
b) addition d'au moins une diamine ;
c) addition d'un ou de plusieurs polyols ayant chacun un poids moléculaire moyen égal ou inférieur à 800 g/mole avant ou après la réaction avec ladite au moins une diamine ; et
d) réaction facultativement du produit obtenu dans les étapes a) à c) avec au moins un agent de terminaison.

11. Procédé selon la revendication 10, dans lequel l'étape a) est réalisée en présence d'un solvant, d'un catalyseur et facultativement d'additifs.

12. Matière formant liant pour une encre d'impression de manchon rétractable, comprenant une résine de polyuréthanne selon l'une quelconque des revendications 1 à 9.

13. Matière formant liant selon la revendication 12, comprenant en outre des additifs et un solvant.

14. Procédé de préparation d'une matière formant liant selon la revendication 12 ou 13, comprenant l'étape de dissolution d'une résine de polyuréthanne selon l'une quelconque des revendications 1 à 9 dans un solvant pour fournir une solution limpide, et facultativement d'ajout d'additifs à ladite solution limpide.

15. Encre d'impression de manchon rétractable, comprenant une matière formant liant selon la revendication 12 ou 13.

16. Encre d'impression de manchon rétractable selon la revendication 15, comprenant en outre un pigment, de la nitrocellulose, et facultativement des additifs et/ou des solvants.

17. Procédé de préparation d'une encre d'impression de manchon rétractable selon la revendication 15 ou 16, comprenant les étapes d'obtention d'une dispersion dudit pigment dans de la nitrocellulose, et de combinaison de ladite dispersion avec ladite matière formant liant et facultativement lesdits additifs et/ou solvants.

18. Manchon rétractable, comprenant une encre d'impression de manchon rétractable selon l'une quelconque des revendications 15 à 16 sur au moins une partie de sa partie de surface.

19. Manchon rétractable selon la revendication 18, lequel manchon rétractable est réalisé en un matériau choisi dans le groupe constitué d'un polystyrène orienté, d'un poly (chlorure de vinyle), de polyesters tels que du polyéthylène téréphtalate, de polyesters modifiés par glycol tels qu'un polyéthylène téréphtalate glycol (PETG), un polypropylène, ou de résines de polystyrène modifié.

20. Procédé de fabrication d'un manchon rétractable selon la revendication 18 ou 19, comprenant les étapes
(A) d'obtention d'un matériau en film ;
(B) d'application sur ledit matériau en film d'une impression au moyen d'une encre d'impression de manchon rétractable selon la revendication 15 ou 16 ;
(C) de transformation en un tube dudit matériau en film revêtu de l'impression.

21. Procédé selon la revendication 20, comprenant en outre les étapes consistant à
(D) amener ledit tube sur l'objet sur lequel ledit manchon rétractable doit être appliqué et découper le tube à la longueur appropriée ; et
(E) rétracter ledit tube pour qu'il se conforme à la forme de l'objet.

22. Utilisation d'une résine de polyuréthanne selon l'une quelconque des revendications 1 à 9 en tant que liant dans une encre d'impression de manchon rétractable comprenant de la nitrocellulose.

23. Utilisation d'une matière formant liant selon la revendication 12 ou 13 pour la fabrication d'une encre d'impression de manchon rétractable.

24. Utilisation d'une encre d'impression de manchon rétractable selon la revendication 15 ou 16 dans la fabrication de manchons rétractables.
